# EUROPÄISCHE PATENTANMELDUNG

(11) **EP 3 025 805 A2**
(43) Veröffentlichungstag der Anmeldung: **01.06.2016**
(21) Anmeldenummer: 15190055.2
(22) Anmeldetag: 15.10.2015
(51) Int. Cl.: B21D 51/02, B23P 15/00, F42B 10/42, F42B 15/10, B21D 22/02

(54) **VERFAHREN ZUM HERSTELLEN EINER KÖRPERSTRUKTUR EINES FLUGKÖRPERS SOWIE VORRICHTUNG EINER FLUGKÖRPERSTRUKTUR**

(30) Priorität: 28.11.2014 DE 102014224469
(71) Anmelder: Bayern-Chemie Gesellschaft für flugchemische Antriebe mbH, 84544 Aschau am Inn (DE)
(72) Erfinder: Bartinger, Franz, 84494 Neumarkt-St. Veit (DE)
(74) Vertreter: LS-MP von Puttkamer Berngruber Loth Spuhler

(57) **Zusammenfassung**

Verfahren zum Herstellen einer, wenigstens einen metallenen Werkstoff umfassenden Wandung (1) einer Vorrichtung, insbesondere eines Flugkörpers (2).

Das Verfahren umfasst die folgenden Schritte:
Walzen des Werkstoffes zur Ausbildung einer Wandung (1) und Formen der Wandung (1) zur Ausbildung einer mehrdimensional Wandung (3). Ein weiterer Schritt umfasst das Verschweissen von Bereichen (4) der Wandung (3) miteinander zur Ausbildung einer Körperstruktur (5) der Vorrichtung (2) und Kalibrieren der Körperstruktur (5).

Durch kalibrierendes Impandieren und/oder durch kalibrierendes Expandieren werden elastische Presssitze erzeugt. Es werden etwas größere Trennstrukturen in die Passsitze eingepresst. Durch das Einpressen erfolgt ein Anschmiegen der Teile aneinander, wodurch eine prozeßsichere Schweißnahtgeometrie erzeugt wird. Das Schweißen erfolgt in axialer Richtung zwischen Trennstruktur und Innenwandfläche der Wandung (3). Der Schweißprozess ist so abgestimmt, daß er die Kaltverfestigung der Wandung und der Trennstruktur nur marginal beeinflußt.

## Beschreibung

Die Erfindung betrifft ein Verfahren zum Herstellen einer Raumform, umfassend wenigstens eine metallenen Werkstoff umfassenden Wandung, insbesondere zum Herstellen einer Raumform eines Flugkörpers, umfassend die Schritte:
Walzen des Werkstoffs zur Ausbildung einer dünnen, gleichwohl hochfesten Wandung, Formen der Wandung zur Ausbildung einer mehrdimensional Raumform, anschließendes Verschweissen von Bereichen der Wandung miteinander zur Ausbildung einer Raumform der Vorrichtung und weiter vorzugsweise Kalibrieren der Raumform. Weiter vorzugsweise erfolgt ein Einbringen und Verschweissen von Trennstrukturen innerhalb der Raumform.

Die Erfindung betrifft weiter eine Vorrichtung mit einer nach dem Verfahren hergestellten Raumform, insbesondere Körperstruktur.

Aus dem Europäischen Patent EP 548 723 ist ein Verfahren zu einer Querschnittsverringerung von Metallrohren größeren Durchmessers zu Metallrohren kleineren Durchmessers bekannt. Dies erfolgt mittels einer Ziehmaschinenzugeinheit, die zum kontinuierlichen Transport und Ziehen eines metallischen Zugrohlings dient, mit einem Ziehwerkzeug zur Querschnittsreduzierung des metallischen Rohlings stromab des Ziehwerkzeugs zusammenwirkt und zumindest zwei Triebketten mit Zuggliedern aufweist. Dieses Verfahren ist freilich nur bei Standardrohren anwendbar und versagt bei der Herstellung dünner und hochfester Rohre, insbesondere wenn diese eine präzise längsgeometrische Form aufweisen müssen.

Es sind auch Verfahren zu nahtlos gezogenen Rohren bekannt. Bei nahtlos gezogenen Rohren wird - vereinfacht ausgedrückt - ein Dorn durch ein Rohr gezogen, wobei der Dorn die Tendenz hat, irgendwo in der Bearbeitungsstrecke von einem geraden und präzisen Führungsverlauf auszuweichen, mit der Folge des Entstehens ungleichmäßiger Wandstärken. Dies hat negative Auswirkungen bei der Bestimmung, Berechnung und Festlegung von Festigkeit und Berstdruck des angestrebten Rohres. Kommt es auf einen sicherheitsrelevanten Einsatz des Rohres an, bedeutet dies die Notwendigkeit, die Masse des Rohrmaterials zu erhöhen, insbesondere wenn Toleranzen zu berücksichtigen sind. Wenn man z.B. eine Toleranz hätte von plus / minus 0,1, wären das bei 2 mm Wandstärke schon 20 % zusätzlicher Masse, was bei Einsatzgebieten mit geforderten sehr dünnen, hochfesten aber gleichzeitig sicheren Raumstrukturen, z. B. Rohren, negative Effekte hat.

Aus der DE 39 34 834 C2 ist ein lenkbarer Flugkörper bekannt, der eine Körperstruktur aufweist, die längs geteilt ist und zwei Halbschalen aufweist.

Die Halbschalen sind über ein Verbindungsband miteinander verbunden, das sich entlang der beiden Trennfugen erstreckt.

Derartige lenkbare Flugkörper haben den Nachteil, dass die Körperstruktur des Flugkörpers eine erhebliche Wandstärke haben muss, damit die Körperstruktur eine ausreichende Stabilität, Festigkeit und Verwindungssteifigkeit aufweist, um Drücken standhalten zu können, die im Inneren des Flugkörpers, wie z.B. der Brennkammer oder der Druckgaskammer, auftreten.

Die aktuelle Bauweise von Flugkörperstrukturen ist ferner durch die Fertigung von fließgedrückten Rohren oder durch Bahnen gefertigte Komponenten gekennzeichnet; ebenso durch die Fertigung von Verbindungsbauteilen durch spanabhebende Bearbeitung; durch die Verbindung der Bauteile mittels Laser- oder Elektronenstrahlschweissen.

Bei den vorbekannten Verfahren erfolgt die Steigerung der Festigkeit der insbesondere metallenen Wand mittels einer Wärmebehandlung. Bei dem bekannten Herstellungsverfahren werden die verschweissten Bauteile wärmebehandelt. Denn es ist in dem mechanisch bearbeitenden Teil noch keine hohe Festigkeit vorhanden. Deshalb wird die Wandung des Flugkörpers zur Steigerung und Erreichung der Endfestigkeit einer Wärmebehandlung unterzogen. Die Wärmebehandlung erfolgt z.B. unter Stickstoff bei etwa 400° C und über eine Zeitdauer von ca. 4 Stunden.

An besonderen Stellen, an denen eine besondere Präzision gefordert ist, etwa im Bereich von Hängern und Schnittstellen zu anderen Komponenten sowie der Anbringung von Trennstrukturen, bedürfen die aus dem Stand der Technik bekannten Strukturen der Nachbearbeitung, was mit zum Teil erheblichen Zusatzkosten verbunden ist.

Durch diese zahlreichen Arbeitsschritte entsteht eine aufwendige Fertigung, die mit hohen Kosten verbunden ist. Dies gilt umso mehr, wenn dünne und gleichzeitig hochfeste, gleichwohl sichere Körperstrukturen geschaffen werden sollen.

Darüber hinaus stellt sich ein Schweissprozess mit einem Schweissfaktor 1 als Herausforderung dar, je dünnwandiger das Grundmaterial ist.

Des Weiteren sollte es nicht notwendig sein, teure Werkstoffe, wie etwa ausscheidungshärtende Martensite, verwenden zu müssen.

Der Erfindung stellt sich daher die Aufgabe, ein Verfahren zum Herstellen einer Wandung für eine Raumform, insbesondere für eine Körperstruktur eines Flugkörpers und einen entsprechenden Flugkörper bereitzustellen, bei der die Wandung zumindest die erforderlichen Sicherheitsfaktoren erfüllt.

Ein wesentliches Ziel ist die kostengünstige Herstellung der Raumform, insbesondere für Flugkörperstrukturen, insbesondere bei minimaler Masse, d.h. kleinster Wandstärke bei ausreichendem Sicherheitsfaktor.

Die Einsparung von Gewicht ist ebenfalls wesentliches Ziel.

Insbesondere stellt sich die Erfindung die Aufgabe, die Wandstärke der Raumform, insbesondere der Körperstruktur eines Flugkörpers, weiter zu reduzieren und gleichwohl die bisher erreichte Festigkeit mindestens beizubehalten oder sogar deutlich zu erhöhen.

Insbesondere soll dadurch erreicht werden, dass eine Körperstruktur eines Flugkörpers geschaffen ist, die für den Kleinflugkörperbau, insbesondere für den Einsatz für schultergetragene Flugkörper, sonstige Raketen und Drohnen, geeignet ist.

Die Raumform muss auch bei diesen Einsatzzwecken geeignet sein, etwa sicher Raketentreibstoffsysteme aufnehmen und zünden zu können oder etwa Flugtriebwerke und / der Ausstosstriebwerke aufzunehmen. Eine Gefährdung der jeweiligen Bedienperson muss vermieden werden.

Gleichzeitig soll die Wandung einen ausreichend hohen Festigkeitswert aufweisen, der eine nahezu 100%-ige Exaktheit in der Ausbildung der Geometrie der Raumform, insbesondere der Körperstruktur eines Flugkörpers, ermöglicht. Bei reduzierter Wandstärke soll der Flugkörper eine nur minimale Abweichung von einem geraden Verlauf der Raumform aufweisen.

Zudem soll ein hochfestes, eine minimale Wandstärke aufweisendes gewalztes Band noch kaltumformbar sein.

Selbst bei Erreichen einer hochfesten, aber noch kaltumformbaren Raumform, insbesondere einer rohrförmigen Struktur mit minimaler Wandstärke, stellt sich die Gewährleistung einer exakten Formgebung als schwierig dar, insbesondere ist eine 100%-ige runde, insbesondere zylindermäßige Formgebung schwierig. Auch die Abweichung in dem geraden Verlauf der Raumform stellt insbesondere für Flugkörper ein offenkundiges Problem dar.

Weiterhin soll eine gute Schweissbarkeit von Werkstoffen mit einer Dicke von deutlich weniger als 2 mm unter Verwendung eines Schweissfaktors 1 gewährleistet sein.

Unter Schweissfaktor wird das Verhältnis der Zugfestigkeit der Schweissnaht zur Zugfestigkeit des Grundwerkstoffes verstanden. Ein Schweissfaktor 1 bedeutet demnach, dass die zulässige Berechnungsspannung der Schweissnaht zu 100% gleich zum Grundwerkstoff ist.

Außerdem sollen durch Reduzierung der Arbeitsschritte der Herstellungsaufwand verringert und damit die Kosten reduziert werden.

Auch soll kostengünstigeres Material einsetzbar sein, z.B. im Vergleich zu bisher verwendeten ausscheidungshärtenden martensitischen Edelstählen.

Diese Aufgaben werden dabei durch ein Verfahren gemäß dem Anspruch 1 gelöst, wobei die Unteransprüche vorteilhafte Ausgestaltungen aufweisen.

Die Aufgabe in Bezug auf die Vorrichtung wird durch die Merkmale des Anspruches 12 gelöst, wobei die darauf bezogenen Unteransprüche ebenfalls vorteilhafte Ausgestaltungen aufweisen.

Die Aufgabe wird weiter gelöst durch eine Vorrichtung, insbesondere einen Flugkörper, mit einer verfahrensgemäß hergestellten Raumform, insbesondere Körperstruktur. Die Körperstruktur umfasst wenigstens eine, einen metallenen Werkstoff aufweisende Wandung.

Die Erfindung ist dabei nicht auf die vorerwähnten Einsatzgebiete beschränkt - auch wenn der Einfachheit halber diese in der vorliegenden Anmeldung durchgängig erwähnt werden -, sondern erstreckt sich auf diejenigen technischen Gebiete, in denen es auf den Einsatz von hochfesten, aber sehr dünnen, gleichwohl sicheren Raumformen insbesondere aus metallischen Materialien ankommt, wie z.B. in der Druckbehälterindustrie, Möbelindustrie, Werkzeugeindustrie, Haushaltsindustrie, bei Fitnessgeräten, Sport- und Freizeitgeräten, in der Automobilindustrie, im Maschinenbau, in der Leichtmetallindustrie, petrochemischen Industrie, Elektro- und Elektronikbranche, Leichttransportbranche, Schwerlast - und Hubtechnikindustrie, Schifffahrt, Offshore-Industrie, Labortechnik, Atomtechnik. Auch in diesen Industriebereichen oder Einsatzgebieten stellen sich die gleichen Grundprobleme.

Kurzbeschreibung der Erfindung:
Das Verfahren betrifft die Herstellung einer derartigen Raumform, insbesondere einer Körperstruktur eines Flugkörpers, durch die kostengünstige Variante der Herstellung eines hochfesten, längsnahtgeschweissten Rohres und geringer Wandstärke.

Als Alternative kann auch ein nahtlos gezogenes oder fließgedrücktes Rohr verwendet werden. Bevorzugt ist jedoch die Herstellung eines hochfesten längsnahtgeschweissten Rohres, das aus einem gewalzten Band entsteht, das eine Festigkeit von 800 N/mm² übersteigt, vorzugsweise 1000 N/mm² oder sogar noch höher liegt.

Unter Raumform, nachfolgend auch als Körperstruktur bezeichnet, wird eine dreidimensionale Vorrichtung verstanden, die elliptisch, oval oder vorzugsweise rohrförmig und bevorzugt zylinderförmig, aber auch mit rechteckigem, quadratischem, octagonalem oder sonstigem Querschnitt ausgestaltet ist.

Im Weiteren wird unter dem Begriff Raumform eine derartige Vorrichtung, insbesondere auch eine Flugkörperstruktur verstanden, die z.B. in der Lage ist, für schultergestützte Raketensysteme oder Drohnen eingesetzt werden zu können.

Unter Struktur oder Körperstruktur wird eine Raumform verstanden, insbesondere eine solche, die durch impandierendes und/oder expandierendes Kalibrieren bearbeitet ist.

Unter der erfindungsgemäßen Vorrichtung wird auch eine Aufnahmeeinrichtung für ein Flugobjekt, etwa eine Rakete, etwa in Form eines Rohres verstanden.

Unter Flugkörperstrukturen werden insbesondere Feststofftriebwerksstrukturen verstanden.

Unter Trennstruktur wird ein Bauteil verstanden, das geeignet ist, den Innenraum der Raumform in mehrere Raumteile zu trennen. Sie liegt mit ihrem Außenumfang an der Innenwandung der Raumform an. Sie kann etwa eine Scheibe, ein Klöpperboden oder dergleichen sein und vorzugsweise aus Vollmaterial bestehen. Sie kann aber etwa auch lochförmig sein oder sonstige Öffnungen oder Zwischenstrukturen aufweisen, etwa treppenförmig gestuft sein.

Die Trennstruktur kann vorzugsweise eine Öffnung in ihrer Mitte zur Aufnahme etwa einer weiteren, inneren Raumform im Innenraum der (äußeren) Raumform aufweisen. In diesem Fall übernimmt sie auch die Funktion einer Haltestruktur.

Unter Durchmesser wird vorzugsweise der Aussendurchmesser verstanden.

Unter Kalibrierung wird ein Verfahrensschritt verstanden, bei dem ein Duchmesser und die Zylinderform in eine ideale Form und ein gewünschtes Maß gebracht werden.

Unter kalibrierendem Impandieren wird verstanden, dass der Außen- und Innenumfang der Raumform, insbesondere der Körperstruktur ganz oder zumindest bereichsweise verringert wird.

Demgegenüber wird beim kalibrierenden Expandieren ganz oder zumindest bereichsweise der Innen- und Außenumfang der Raumform aufgeweitet.

Die Wandung zu diesem Rohr wird aus einem Band im Rahmen eines herkömmlichen Walzverfahrens hergestellt, wobei sie jedoch am Ende des Walzverfahrens auf einen kleinen Querschnitt kalt gewalzt wird. Die letzten Durchzüge werden vorzugsweise ohne Glühschritt durchgeführt, wodurch die Festigkeit auf die gewünschten Werte erhöht wird.

Nach dem Walzen wird das Band zum Coil aufgewickelt, wobei es auf einen dem Rohrdurchmesser entsprechenden Umfang geschnitten wird.

Bei der Rohrfertigung erfolgt ein Beschneiden des Bandes auf die nötige Breite sowie die Formgebung und die Festlegung der Schweissnahtgeometrie. Dazu wird das Band über Einlaufrollen zum Rohr geformt und anschließend geschweisst, wobei Laserstrahlschweissen, Elektronenstrahlschweissen oder Hochfrequenzschweissen bevorzugt sind.

Danach erfolgt ein Ablängen des Rohres, unter Berücksichtigung der späteren Längenänderung aufgrund der vorzugsweise erfolgenden Kalibrierung, d.h. insbesondere der Einformung durch Impandieren und Expandieren.

Die Kalibrierfunktion des Einformens durch Impandieren oder Expandieren kann gegen ein Werkzeug, zum Beispiel einen Dorn oder eine Hülse erfolgen.

Ein Segmentpressen, Rollieren, Kneten, Hämmern ist möglich.

In diese geformte Raumform können verschiedenste Teile, etwa Trennstrukturen, mit leichtem Übermaß eingepresst, positioniert und mittels Elektronenstrahlschweissen oder Laserstrahlschweissen geschweisst werden.

Das Schweissen erfolgt unter einem Winkel in axialer Richtung. Durch diese Methode werden die zu verschweissenden Teile gleichmäßig aufgeschmolzen, vorzugsweise nur angeschmolzen, und damit verbunden; die Wärmeeinflusszone bleibt sehr klein und zerstört die durch die Kaltverfestigung des Rohres erzielten Eigenschaften nicht.

Das Verfahren umfasst dabei im Einzelnen die folgenden Schritte und Materialien:
Werkstoffe sind Materialien, die in Produktionsprozessen verarbeitet werden und in das jeweilige Endprodukt eingehen. Es handelt sich dabei in der Regel um Rohstoffe, Hilfsstoffe, Halbzeuge oder Halbfertigprodukte.

Erfindungsgemäß werden im Verfahren zum Herstellen der mehrdimensional zu verarbeitenden Wandung metallene Werkstoffe eingesetzt. Es handelt sich um Metalle oder Metalllegierungen. Der metallische Werkstoff entsteht durch das Zusammenspiel seiner chemischen Zusammensetzung mit der angewandten Prozessroute, insbesondere der thermomechanischen Behandlung.

Der mechanische Werkstoff ist vorzugsweise ein Stahl oder ein Gusseisen. Er kann darüber hinaus ein Nichteisenmetall sein wie z.B. ein Reinmetall oder eine Nichteisenlegierung. Darüber hinaus kann als Werkstoff mit Stickstoff stabilisierter, oder üblicher Edelstahl verwendet werden.

Es versteht sich von selbst, dass die vorausgehende Aufzählung rein beispielhaft und in keiner Weise ausschließlich gemeint ist.

Es erfolgt ein Walzen des Werkstoffes zur Ausbildung einer Wandung und Formung der Wandung zur Ausbildung einer mehrdimensionalen Wandung.

Im Stahlwerk wird dabei in an sich herkömmlicher Weise aus einer Bramme durch Warm- und Kaltwalzschritte ein Band von ca. 2,5 mm Dicke hergestellt. Die letzten finalen Kaltwalzvorgänge werden ohne Glühschritte durchgeführt. Das Band erhält dabei eine Dicke von 1 - 1,7 mm, bevorzugt eine Dicke von 1 - 1,5 mm, ganz besonders bevorzugt eine Dicke von 0,6 mm - 1,2 mm und eine Festigkeit von mehr als 800 N/mm², wobei die Festigkeit vorzugsweise 1000 N/mm² erreicht oder noch weiter bevorzugt sogar übersteigt und dabei bis zu 1300/mm² erreicht. Dieses Beispiel bezieht sich auf eine Wandung, die für eine Raumform mit einem Durchmesser von etwa 60 mm bis etwa 120 mm geeignet ist.

Der Werkstoff hat eine Ausgangsfestigkeit. Die angestrebte Festigkeit entsteht durch das Walzen, vorzugsweise durch Kaltwalzen, auf die gewünschte Dicke.

Der Walzvorgang bezeichnet ein Umformverfahren, bei dem der metallische Werkstoff zwischen wenigstens zwei rotierenden Werkzeugen (Walzen) umgeformt wird.

Beim Warmwalzen findet die Umformung oberhalb der Rekristallisationstemperatur des Werkstoffs statt. Ist dies nicht der Fall, so ist vom Kaltwalzen die Rede.

Zur Ausführung des Verfahrens wird der Werkstoff längsgewalzt oder quer- oder schräg gewalzt. Der Werkstoff verlässt den Walzvorgang als Breit- oder Flachprodukt oder in Form eines Langprodukts.

Der erfindungsgemäße Werkstoff kann in einen Duo-Walzwerk oder in einem Trio-Walzwerk oder einem Universalwalzwerk bearbeitet werden. Darüber hinaus kann der Werkstoff einen Reckwalzprozess, einen Querwalzprozess, einen Ringwalzprozess oder einen Schrägwalzprozess durchlaufen.

Der Walzvorgang wird dabei vorzugsweise ohne finales Glühen des Werkstoffes durchgeführt. Hierbei erhält der Werkstoff gegen Ende des Walzprozesses eine Dicke von beispielsweise 1 bis 1,5 mm. Die Festigkeit des Werkstoffes wird auf einen gewünschten Wert erhöht, der beispielsweise 1000 N/mm² erreicht oder besonders bevorzugt übersteigt.

Durch das Walzen auf einen kleinen Querschnitt unter Durchführung der finalen Walzvorgänge ohne Glühschritte wird die Festigkeit der Wandung der Körperstruktur deutlich erhöht.

Es erweist sich als vorteilhaft, dass der Werkstoff durch abschließendes Bearbeiten, insb. Walzen hoch verfestigt wird.

Wenn man z.B. ein Material erzielen möchte, das 1 mm Wandstärke hat und das eine gewisse Festigkeit aufweisen soll, ist es vorteilhaft, ein bestimmtes Aufmaß auf dem teilgewalzten Band, sog. Vormaterial, zu belassen, z.B. 1,15 mm, und dann in einem abschließenden Verfahrensgang das Material in diesem Beispielsfall von 1,15 mm auf 1 mm herunterzudrücken und zu -ziehen und/oder -strecken und / oder zu -walzen. Bei einer gewünschten Wandstärke von 1,7 mm etwa könnte das Aufmaß etwa 0,2 mm und damit die Gesamthöhe 1,9 mm betragen.

Hierdurch sind verschiedene, gewünschte Festigkeiten erreichbar.

Diese abschließende Verfestigung etwa durch das Kaltwalzen kann im eigentlichen Walzwerk oder in gesonderten Kaltwalzwerken erfolgen.

Auch diese im Hinblick auf den Walzprozess genannten Beispiele sind in keiner Weise ausschließlich, sondern nur beispielhaft gemeint. Es versteht sich von selbst, dass auch andere Walzverfahren eingesetzt werden können.

Bei alledem ist es wichtig zu beachten, dass dabei eine wesentliche Zielanforderung eingehalten wird, nämlich dass das gewalzte Band noch plastisch formbar, vorzugsweise kalt umformbar bleibt. Denn je fester das Band wird, desto weniger umformbar wird es aber.

So sind zwar durch Bearbeitung erzielte Festigkeiten derartiger Werkstoffe bekannt, die an sich deutlich über den erfindungsgemäßen Werten liegen. Im Zusammenspiel mit der erfindungsgemäßen Wandstärke sowie den vorgesehenen Durchmessern würden diese Werte aber dazu führen, dass der Werkstoff nicht mehr umformbar ist. Es würden hierbei federelastische Eigenschaften eintreten, so dass eine dauerhafte Verformbarkeit verloren geht.

Lediglich rein beispielhaft erwähnt sei die Tatsache, dass bei einer Dehnung von 7 % oder 8 % der Werkstoff noch formbar bleibt.

Nach dem Walzen wird das Band zu einem dem Rohrdurchmesser entsprechenden Umfang geschnitten und zum Coil aufgewickelt.

Der Coil kann typischerweise etwa 100 - 1000 m lang sein. Die Aufwicklung liegt dabei noch im elastischen Bereich, da der Coil typischerweise über große Innen-Durchmesser verfügt, so dass beim Abwickeln des Bandes keine bleibenden Formveränderungen desselben entstehen.

Es folgt ein Abwickeln des Bandes. Anschließend daran erfolgt ein finales Beschneiden des Bandes auf die nötige Breite, um den gewünschten Durchmesser sowie die Formgebung der Schweissnahtgeometrie zu erreichen.

Anschließend wird das Band über Einlaufrollen zur Raumform, vorzugsweise zum Rohr geformt und der Länge nach geschweisst. Die Umformung zur Raumform folgt dabei an sich geläufigen Verfahren.

Das kaltverfestigte Band wird eingeformt, die Quanten werden hochgestellt, und es wird immer mehr zum Rohr zusammengefahren, sog. Einlaufrollen.

Rein beispielhaft und in keiner Weise ausschließlich wird die Wandung zur Ausbildung einer mehrdimensional Wandung durch Druck oder Zugdruck umgeformt. Sie kann durch Zugumformen, Biegeumformen oder Schubumformen in die gewünschte mehrdimensional Form gebracht werden.

Die Verschweissung erfolgt vorzugsweise längsnahtgeschweisst.

Der Laser schweisst von oben das umgeformte Gebilde zu, während am hinteren Ende das Rohr herausgeschoben wird. Mit dem herauslaufenden Rohr ist eine Bandschleife wirkungsmäßig aus der Herstellvorrichtung verbunden, die die Schweissnaht an der Oberfläche noch glättet. Vom hinteren Ende der Raumform, das noch offen ist, tritt eine Kratzvorrichtung in das Innere der Raumform ein und schabt den Wurzelüberhang bis zu maximal 0,15 mm, der verbleiben darf, heraus. Diese Art der Materialumformung und -bearbeitung ist rein beispielhaft erwähnt.

Infolge der Erzeugung der Raumform durch plastische Verformung, insb. Kaltumformung ist eine vorteilhafte Ausgestaltung von Form und Lage der Schweissnaht möglich, wodurch eine lediglich partielle Beeinflussung des Grundwerkstoffes gegenüber einem Durchschweissen ermöglicht wird.

Das Verfahren umfasst hierbei die Schritte des Verschweissens von Bereichen der Wandung miteinander zur Ausbildung einer Raumform, insbesondere einer Körperstruktur der Vorrichtung. Mithin nimmt auch die Wandung der Raumform, insbesondere der Körperstruktur in Form vorzugsweise eines Rohres, vorzugsweise vollständig, jedenfalls bereichsweise eine Wandstärke an, die einen Wert von 2,5 mm nicht übersteigt. Die Wandstärke des besonders vorzugsweisen zylindrischen Rohres liegt nach der Erfindung etwa zwischen 0,6-2,5 mm, ganz bevorzugt zwischen 0,6 - 1,5 mm. Zusätzlich hat die Wandung eine Festigkeit, die 800 N/mm² übersteigt. Die Festigkeit erreicht vorzugsweise 1.000 N/mm² oder übersteigt diese sogar bevorzugterweise und übersteigt sogar ganz bevorzugterweise 1.250 N/mm² und erreicht bis zu 1.300 N/mm².

Dieses Beispiel der angegebenen Wandstärke gilt für eine Raumform von etwa 60 mm bis etwa 120 mm Durchmesser.

Unter Beachtung des Betriebsdruckes (Innendruckes), der Festigkeit des Materials, und von Sicherheitsfaktoren ergeben sich für größere Durchmesser bis beispielsweise 500 mm, der Raumform entsprechende Wandstärken.Bei einem Raumformdurchmesser von etwa 500 mm beträgt die Wandstärke bei den vorerwähnten Festigkeitswerten ganz bevorzugt zwischen 5 mm und 3,85 mm.

Das gewünschte Verhältnis von Durchmesser der Raumform zur Wandstärke der Raumform und zur Festigkeit lässt sich nach Maßgabe der gewünschten Einsatzzwecks auswählen. Grundsätzlich gilt, dass die Wandstärke umso geringer ausfallen kann, je höher der erzielbare und/oder gewünschte Wert der Festigkeit ist.

Dieses Verhältnis zwischen Wandstärke und Festigkeit soll nachfolgend rein exemplarisch und ohne dass die Erfindung auf diese Werte beschränkt oder hierauf eingeschränkt wäre für folgende Durchmesser der Raumform aufgezeigt werden:

| Durchmesser in mm | 1000 N/mm²/Wandstärke | 1300 N/mm²/Wandstärke |
|---|---|---|
| 100 | 0,9 - 1,1 | 0,6 - 0,8 |
| 200 | 1,8 - 2,2 | 1,4 - 1,7 |
| 300 | 2,7 - 3,2 | 2,0 - 2,5 |
| 400 | 3,8 - 4,3 | 2,4 - 3,4 |
| 500 | 4,5 - 5,5 | 3,4 - 3,85 |

Der Fachmann wird hierbei auch den gewünschten Innendruck berücksichtigen, dem die Raumform genügen muss. Die vorstehend tabellarisch wiedergegebenen Beispiele berücksichtigen einen Innendruck von 200 bar mit einem Sicherheitsfaktor von 1,5 inklusive und haben sich in dieser Konfiguration bestens bewährt.

Beim Verschweissen werden Bereiche der Wandung zur Ausbildung einer Körperstruktur des Flugkörpers miteinander verschweisst.

Bereiche der Wandung werden stirnseitig aneinander stoßend miteinander verschweisst. Die Bereiche der Wandung können sich zum Verschweissen auch überlappen.

Beim Schweissen werden Bereiche der Wandung unter Anwendung von Wärme und/oder Druck mit oder ohne Schweisszusatzwerkstoffen unlösbar miteinander verbunden. Die Bereiche der Wandung werden nach dem Schmelzschweissverfahren oder dem Pressschweissverfahren miteinander verbunden.

Die Schweissnaht erstreckt sich vorzugsweise entlang der Längsachse der Körperstruktur. Die Schweissnaht kann dabei geradlinig verlaufen oder einen gewinkelten Verlauf annehmen. Es ist auch denkbar, dass die Schweissnaht radial zur Längsachse der Körperstruktur auf der Wandung der Körperstruktur angeordnet ist.

Das auch entlang seiner Längsnaht geschweisste Rohr weist eine minimale Wandstärke auf.

Vorzugsweise wird die mehrdimensionale Wandung der Körperstruktur mit einem Schweissfaktor 1 geschweisst.

Die beim Verschweissen der Bereiche der Wandung entstehende Schweissnaht kann in Bezug auf ihre Form und ihre Lage zur Raumform, insb. Körperstruktur des Flugkörpers an die jeweiligen Erfordernisse angepasst werden. Im Vergleich zum Durchschweissen von Strukturbereichen im Stand der Technik wird der Werkstoff beim Schweissen der Wandung der Körperstruktur des Flugkörpers lediglich partiell beeinflusst.

Der Schweissvorgang erfolgt dabei vorzugsweise unter einem Winkel in axialer Richtung. Auf diese Weise werden die zu verschweissenden Teile gleichmäßig aufgeschmolzen und miteinander verbunden. Es erweist sich als vorteilhaft, dass die Wärmeeinflusszone sehr klein bleibt und die Kaltverfestigung der Körperstruktur nicht zerstört wird.

Beispielhaft kann zur Herstellung des Längsnaht geschweissten Rohres ein nicht rostender Stahl eingesetzt werden. Verfahrensgemäß wird damit eine Zugfestigkeit von > 800 N/mm² bis zu 1.300 N/mm² erreicht.

Die gewünschten Raumformdurchmesser, insb. Rohrdurchmesser, betragen etwa für schultergestützte Flugkörper etwa 7 - 11 cm, vorzugsweise 8 - 10 cm und ganz bevorzugt etwa 8,2 - 9 cm.

Die Durchmesser können in allen anderen Einsatzbereichen natürlich ebenfalls variieren und stehen dabei in einem gewissen Verhältnis zur angestrebten Festigkeit und Dicke der Wandung der Raumform.

Die auf diese Weise erreichte Streckgrenze Rp 0,2 liegt verfahrensgemäß über einem Wert von 800 N/mm² sowie deutlich darüber. Hieraus ist eine Bruchdehnung (Quer) A₈₀ von über 10% erreichbar.

Es hat sich in diesem Zusammenhang gezeigt, dass ferritischer Stahl etwa der Güte X6Cr17 im Rahmen der vorliegenden Erfindung nicht geeignet ist, da bei einer Festigkeit von 700N/mm² lediglich eine Dehnung < 2% liegt, sodass eine Umformung dieses kaltgewalzten Stahles in diesem Bereich nicht mehr möglich ist.

Austenitische Stähle hingegen erscheinen für die vorliegende Erfindung, gerade auch unter Berücksichtigung von Kostengesichtspunkten, als vorteilhaft.

Ein austenitischer Stahl etwa der Güte X10CrNi18-8 weist bei einer
- Festigkeit von etwa 850 N/mm² eine Dehnung von etwa 25%,
- Festigkeit von etwa 1000 N/mm² eine Dehnung von ca. 20%,
- Festigkeit von etwa 1150 N/mm² eine Dehnung von etwa 15%,
- Festigkeit von etwa 1300 N/mm² eine Dehnung von ca. 10%
- sowie bei einer Festigkeit von etwa 1500 N/mm² eine Dehnung von etwa 5% auf.

Ein austenitischer Stahl der Güte X5CrNi18-10 weist bei einer
- Festigkeit von etwa 850 N/mm² eine Dehnung von etwa 12%,
- Festigkeit von etwa 100 N/mm² eine Dehnung von ca. 5%.
- Festigkeit von etwa 1150 N/mm² eine Dehnung von ca. 3% und
- bei einer Festigkeit von etwa 1300 N/mm² eine Dehnung von etwa 1% auf.

### Dies gilt jeweils für kaltgewalzte Bänder.

Aus dem unterschiedlichen Kohlenstoffgehalt der beiden beispielhaft vorerwähnten austenitischen Stählen, der mit "X10" und "X5" gekennzeichnet ist, folgt für den Fachmann, das damit auch unterschiedliche Schweisseigenschaften einhergehen, wobei sich für die vorliegende Erfindung allgemein sagen lässt, dass das Schweissen etwas schwieriger wird, je mehr Kohlenstoff in dem Stahl enthalten ist.

Je nach gewünschtem Einsatzzweck lässt sich also aus einer gezielten Kombination der Parameter der Festigkeit des Werkstoffs für die Wandung der Raumform und der gewünschten Wandstärke der Wandung der Raumform ein Produkt erzielen, das die eingangs gestellten Anforderungen und Ziele optimal verwirklicht.

In bevorzugter Weise können hierbei die Parameter der minimalen Dehnung (A₈₀%) für kaltgewalzte, vorzugsweise austenitische Stähle bei der Bestimmung des durchzuführenden Verfahrens und des zu erzielenden Produktes berücksichtigt werden. Weiter bevorzugt können hierbei auch die Kohlenstoffgehalte Eingang als Verfahrensparameter finden.

Selbstverständlich wird der Fachmann bei den angestrebten Parametern auch sonstige Aspekte wie etwa einen denkbaren Zuschlag für Korrosion, Herstellungstoleranz, gewünschten Innendruck, Sicherheitsfaktor berücksichtigen.

Die Raumform aus nicht rostendem Stahl wird längsgeschweisst oder hochfrequenz- geschweisst, wodurch die Anforderungen an die Druckfestigkeit der Körperstruktur erhalten bleiben. Der Schweissfaktor liegt vorzugsweise bei einem Wert V = 1.

Zur Erzielung einer besonders exakten Körperstruktur, wird vorzugsweise die Wandung der gesamten Raumform, insbesondere der Körperstruktur des Rohres kalibriert. Dies dient insbesondere dazu, Rundheits- und Geradheitsfehler des Rohres auszugleichen, um insbesondere die erforderliche Präzision für einen Flugkörper zu erreichen.

Unter Kalibrierung wird hier ein Verfahrensschritt verstanden, bei dem ein Duchmesser und die Zylinderform in eine ideale Form und ein gewünschtes Maß gebracht wird.

Darüber hinaus erfolgt vorzugsweise ein Kalibrieren der Raumform, das ein kalibrierendes Impandieren und/oder ein kalibrierendes Expandieren umfasst. Durch diese kalibrierende Bearbeitung der Raumform entsteht eine geänderte Körperstruktur.

Im vorliegenden Verfahren wird die aus der Wandung hervorgebrachte Raumform vorzugsweise auch deshalb kalibriert, um durch Impandieren und/oder Expandieren eine bestimmte Wandstärke nicht zu übersteigen oder zu erreichen und/oder eine Festigkeit zu erreichen, die einen vorbestimmten Wert übersteigt.

Beim kalibrierenden Impandieren wird der Außenumfang der Raumform, insbesondere der Körperstruktur ganz oder zumindest bereichsweise verringert.

Demgegenüber wird beim kalibrierenden Expandieren ganz oder zumindest bereichsweise der Außenumfang der Raumform, aufgeweitet.

Das Impandieren und/oder Expandieren trägt auch zum Ausgleich gewisser Toleranzfehler oder Ungenauigkeiten bei, die bei vorerwähnten Kaltumformung der Wandung zur Raumform auftreten können. So etwa, wenn das dabei entstehende Rohr nicht hundertprozentig zylinderförmig ist, sondern teilweise einen etwa ovalförmigen Verlauf einnimmt.

Ein kalibrierendes Expandieren kommt insbesondere dann in Betracht, wenn innerhalb der Raumform, also z.B. des Rohres, eine weitere Raumform, also z.B. ein Innenrohr, angeordnet wird, das etwa im Bereich der kalibrierenden Expansion durch eine Trennstruktur mit mittiger Öffnung lagepositioniert im Innenraum der äußeren Raumform gehalten, vorzugsweise dauerhaft fixiert ist.

Die Raumform weist in diesem Ausführungsbeispiel wenigstens eine innere Raumform auf, die sich koaxial zu ihrer Längsachse erstreckt und mit einem Abstand zur Wandung im Inneren der Körperstruktur angeornet ist. Die innere Raumform ist durch Abstandhalter von der Wandung der äußeren Körperstruktur beabstandet.

Für die Herstellung, Ausgestaltung sowie stoffliche Zusammensetzung der inneren Raumform gelten dieselben Grundsätze, wie sie für die äußere Raumform beschrieben sind.

Die Anordnung einer solchen inneren Raumform innerhalb der äußeren Raumform kann etwa Sicherheitsaspekten durch abgeschottete Aufnahme von umweltgefährdenden, personengefährdenden Stoffen oder von Funktionsbauteilen oder Vorrichtungen dienen.

Die Impandierung kann beispielsweise durch Segmentpressen vorgenommen werden oder durch Rollieren, durch Kneten oder Hämmern.

Beim kalibrierenden Expandieren wird ein Werkzeug in die Raumform hineingedrückt. Rundheits- und Geradheitsfehler werden auf diese Weise egalisiert.

Zur Anpassung der wenigstens einen Trennstruktur an den Innenumfang der Körperstruktur werden beim Expandieren Werkzeuge (z.B. Dornen) in die Raumform eingeführt.

Es erweist sich als vorteilhaft, dass ein Werkzeug eingesetzt wird, das die gesamte Raumform abdeckt.

Durch Einführen etwa eines Dorns in das Innere der Raumform kann der Innendurchmesser der Körperstruktur eine besondere Genauigkeit erreichen. Durch den Pressvorgang wird der Schweissnahtwurzeldurchhang im Inneren der rohrförmigen Raumform egalisiert. Dabei wird der Außendurchmesser des Rohres geringfügig verkleinert. Durch diese bleibende Verformung werden Fehler egalisiert.

Bei der Kalibrierung der Raumform beim Herstellen von Einzügen in der Kaltumformung werden Durchmesser-Toleranzen von +0,15 mm und Zylindrizitäten von 0,7 über die gesamte Raumform ca. 400 mm erreicht.

Es versteht sich von selbst, dass diese Aufzählung rein exemplarisch gemeint ist. Es können darüber hinaus zur Ausführung der Impandierung und der Expandierung auch andere Verfahren eingesetzt werden.

Nach dem Impandieren und / oder Expandieren und/ oder kalibrierenden Impandieren und /oder Expandieren wird in das Innere der Raumform bzw. Körperstruktur vorzugsweise wenigstens eine Trennstruktur eingefügt.

Sie hält vorzugsweise durch den Presssitz, der infolge der kalibrierenden Impandierung in diesem Bereich entsteht.

Durch eine vorzugsweise leichte Presspassung erfolgt beim Einpressen der Trennstruktur im Bereich des durch die Impandierung kleineren Durchmessers der Körperstruktur eine bereichsweise Wieder-Aufpressung und dadurch ein optimaler Passsitz der Trennstruktur im Innenraum der Körperstruktur, was für die sich vorzugsweise daran anschließende Verschweissung des Aussenumfangs der Trennstruktur an der Innenwandung der Körperstruktur von Vorteil ist.

Das Einbringen der Trennstruktur kann etwa durch einen Stempel, vorzugsweise einen Vakuumstempel erfolgen.

Durch ein leichtes Übermaß der eingepressten Trennstruktur werden Unrundheiten der Körperstruktur ausgeglichen.

Zu diesem Zweck verkleinert man die Körperstruktur zumindest bereichsweise etwas, auch wenn sie etwas unrund ist, und fügt dann die wenigstens eine Trennstruktur, etwa eine Scheibe oder einen Klöpperboden ein. Die Trennstruktur formt sich dann an der Stelle, das Rohr schmiegt sich um sie herum. Anschliessend beginnt man mit dem Verschweissen.

Dadurch kann man kleine Fehler oder Toleranzen in der Herstellung der Raumform ausgleichen. Beim Laserschweissen zu vermeidende Spalte treten erst gar nicht auf. Andernfalls bestünde die Gefahr, dass der Laserstrahl durch diesen Spalt durchginge und es gibt keine prozesssichere Schweissung. Die aus axialer Richtung in die Körperstruktur des Flugkörpers vorzugsweise eingepresste Trennstruktur wird vorzugsweise mittels Laserschweissen von innen verschweisst.

Es können aber auch andere, herkömmliche Schweissverfahren verwendet werden.

Die Festigkeit der Trennstruktur sowie der Körperstruktur wird durch das lediglich partielle Aufschmelzen beim Schweissen nicht zerstört. Das lediglich partielle Aufschmelzen beim Schweissen wird gerade durch den Presssitz der Trennstruktur ermöglicht. Durch die nicht erfolgende Aufschmelzung der gesamten oder der im wesentlich gesamten Wand kann vermieden werden, dass die Vorteile der Kaltverfestigung in diesem Bereich wieder aufgehoben werden und es zu einer Erhöhung der Gefahr des Reissens an dieser Stelle kommt.

Hierdurch entsteht eine unlösbare Verbindung zwischen der Körperstruktur und der eingepressten Trennstruktur.

Die Vermeidung von durch unkontrollierbare Risse entstehenden Gefahren für Leib und Leben zum Beispiel bei der Verwendung der Erfindung im Rahmen von schultergestützten Flugkörpern ist evident.

Hierdurch können auch hochfeste Zwischenräume oder Innenräume innerhalb der Raumform gebildet werden, die etwa bei Flugkörperstrukturen zur sicheren Aufnahme von Treibstoff, aber auch zur Aufnahme anderer Bauteile oder von Funktionsteilen derartiger Flugkörperstrukturen dienen.

Die wenigstens eine Trennstruktur wird zwar vorzugsweise im Inneren der Körperstruktur eingepresst und verschweisst, kann aber auch durch Impandieren oder Expandieren an den Innendurchmesser der Körperstruktur angeformt sein.

Der Berstdruck liegt nach dem vorliegenden Verfahrenprozesssicher bei über dem der Wandstärke entsprechenden Wert. Bei einer Berstprüfung mit Wasser wird die Körperstruktur über 400 mm in der zylindrischen Verformung nicht behindert. Der Berstdruck ist jedoch abhängig von der Rohrwandstärke und der Materialfestigkeit und kann daher schwanken.

Die Körperstruktur kann darüber hinaus in einem Kleinflugkörper, z.B. in einer von der Schulter eines Bedieners abzufeuernden Rakete oder in einer Drohne angeordnet sein.

Nachstehend werden weitere Ausführungsformen der erfindungsgemäßen Vorrichtung anhand der Zeichnung näher erläutert. Dabei zeigen:
Fig. 1 eine Körperstruktur eines Flugkörpers mit Wandung und Einsätzen,
Fig. 2 eine Körperstruktur mit einem expandierten Abschnitt,
Fig. 3 ein Werkzeug zum Expandieren einer Wandung der Körperstruktur,
Fig. 4 eine Körperstruktur mit einem impandierten Abschnitt,
Fig. 5 ein Werkzeug zum Impandieren einer Wandung
Fig. 6 im Querschnitt eine Wandung mit einem Dorn und einer Matritze und
Fig. 7 eine Körperstruktur mit Materialstärke der Wandung.

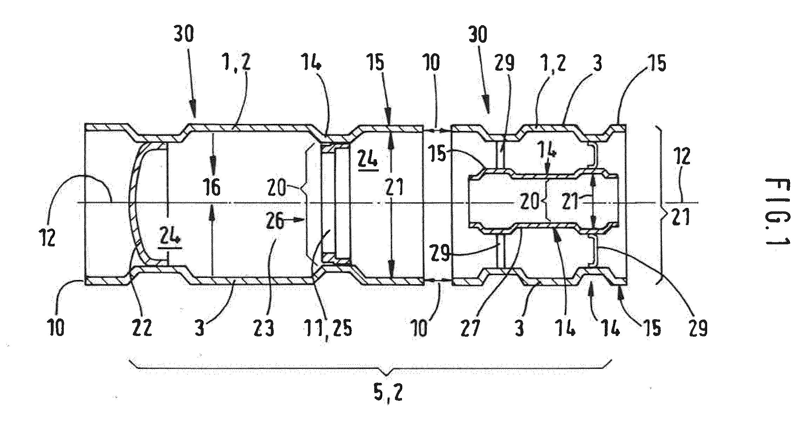

Fig. 1 zeigt im Querschnitt die Körperstruktur 5 einer Flugkörperstruktur 2. Die Wandung 1 der Struktur eines Flugkörpers 2 ist als Wandung 3 ausgebildet. Die Wandung weist Impandierungsbereiche 14 und Expandierungsbereiche 15 auf.

Die beiden großen Rohre 3 werden beispielsweise lediglich je 2 x impandiert, das Rohr hat bereits den gewünschten Aussendurchmesser. Das innere Rohr wird beispielsweise 2 x expandiert. Es ist aber auch anders möglich.

An den Impandierungsbereichen 14 ist der Querschnitt der Körperstruktur 5 durch kalibrierendes Impandieren auf einen geringeren Durchmesser 16 verringert.

Die Wandung 3 weist entlang einer Längsachse 12 der Körperstruktur 5 die Wandstärke 10 auf.

Die Wandstärke 10 weist entlang der Längsachse 12 der Körperstruktur 5 zumindest bereichsweise gleiche oder unterschiedliche Wandstärken 10 auf.

Nach dem Verschweissen der Bereiche 4 der Wandung 3 weist die Körperstruktur 5 einen Durchmesser 16 auf.

Der Durchmesser 5 der Körperstruktur wird durch Impandieren auf einen Durchmesser 20 verengt. Im Expandierungsbereich 15 wird der Durchmesser der Körperstruktur 5 auf einen Durchmesser 21 aufgeweitet.

In Fig. 1 sind in Impandierungsbereichen 14 Trennstrukturen in Form von Klöpperböden dargestellt. Die Trennstrukturen 11 sind am Innenumfang der Körperstruktur 5 mit der Wandung 3 verschweisst.

Die wenigstens eine Trennstruktur 22 ist radial im Inneren der Körperstruktur 5 des Flugkörpers 2 angeordnet und verschließt das Innenvolumen 23 der Körperstruktur in unterschiedliche und voneinander getrennte Kammern 24. Sie weist die Form einer am Außenumfang gebogenen Scheibe auf.

Trennstrukturen 25 sind ebenfalls radial im Inneren der Körperstruktur 5 angeordnet. Die Trennstrukturen 25 weisen jedoch einen Durchbruch 26 auf.

Die Raumform 1, 5 weist in diesem Ausführungsbeispiel wenigstens eine innere Raumform 27 auf, die sich koaxial zu ihrer Längsachse 27 erstreckt und mit einem Abstand 28 zur Wandung 3 im Inneren der Körperstruktur 1, 5 angeornet ist. Die Trennstruktur 25 ist durch Abstandhalter 29 von der Wandung 3 der Körperstruktur 5 beabstandet.

Die ringförmigen, eine mittige Aufnahmeöffnung aufweisenden Abstandhalter 29 können auch Bestandteil einer Trennstruktur 11, 22 sein. Sie können eine Trennstruktur im Inneren der Raumform 1, 5 zusammen mit der inneren Raumform 27 bilden.

Die Abstandhalter 29 können jegliche Art der Verbindung mit der Aussenwand der inneren Raumform 27 bilden. Sie können insbesondere eine reibschlüssige, kraftschlüssige, haftschlüssige, insbesondere durch Verschweissen gebildete Verbindung bilden.

Die innere Raumform 27 weist ebenfalls Impandierungsbereiche 14 und Expandierungsbereiche 15 auf, die jeweils unterschiedliche Durchmesser 20 und 15 gegenüber dem Durchmesser 16 der inneren Raumform 27 aufweisen.

In dem Ausführungsbeispiel gemäß Fig.1 ist die innere Raumform 27 an wenigstens einer Stirnseite so innerhalb der Raumform 1, 5 gelagert, dass ihr Expandierungsbereich 15 in eine mittige Aufnahmeöffnung des Abstandhalters 29 ragt, der seinerseits mit dem impandierten Bereich der inneren Wandung 3 der Raumform 1, 5 durch Verschweissen (nicht dargestellt) verbunden ist.

Die in Fig. 1 gezeigten, beiden Abschnitte 30 der Körperstruktur 5 sind in Fig. 1 lediglich aus Vereinfachungsgründen getrennt und nicht axial miteinander verbunden dargestellt.

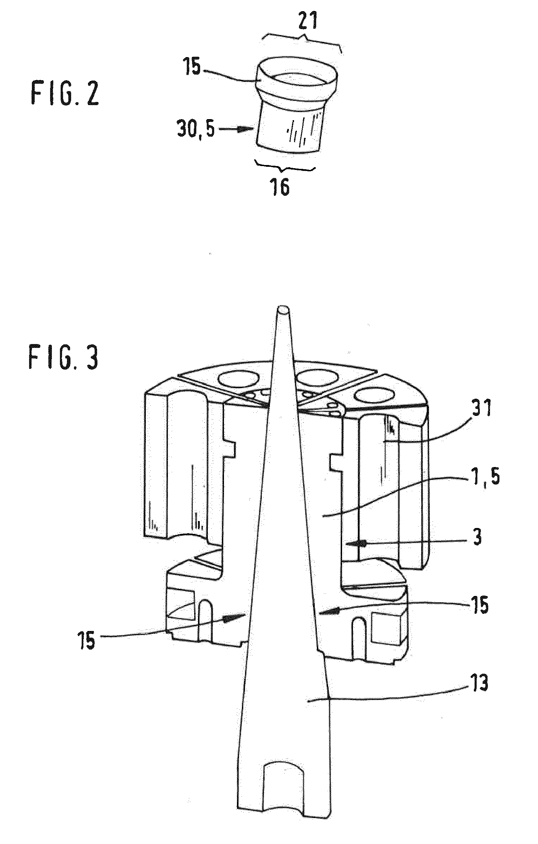

Fig. 2 zeigt einen Abschnitt 30 einer Körperstruktur 5 eines Flugkörpers mit einem stirnseitig angeordneten Expandierungsbereich 15.

Der Durchmesser 21 des Expandierungsbereichs 15 ist größer als der Durchmesser 16 der nicht expandierten Körperstruktur 5.

Fig. 3 zeigt ein Werkzeug das zur Expandierung wie in Fig.2 gezeigt benötigt wird. Der keilförmige Dorn 13 spreizt die Segmente 31 und damit die Raumform.

Um bei der Aufweitung des Expandierungsbereichs 21 der Körperstruktur 5 eine Beschädigung z.B. ein Reißen der Wandung zu vermeiden, wird die Eintauchtiefe des Dornes 13 kontrolliert, beziehungsweise ein nicht dargestelltes Werkzeug in Form eines Ringes aufgebracht.

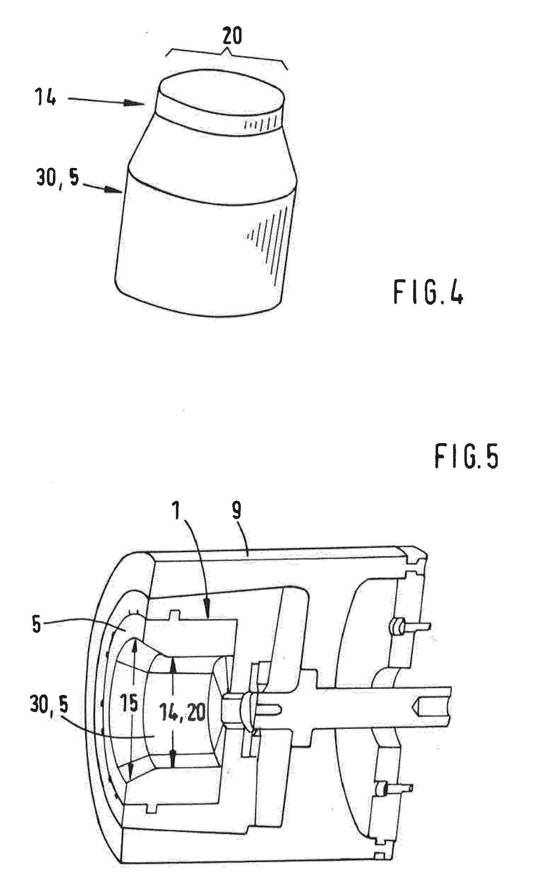

Fig. 4 zeigt einen Abschnitt 30 einer Körperstruktur 5, dessen Durchmesser im Impandierungsbereich 14 auf einen Durchmesser 20 reduziert wird.

Fig. 5 zeigt ein Werkzeug zum Impandieren. Es besteht aus Segmenten, in die die gewünschte Form der Impandierung eingearbeitet wurde. Die Segmente sind federnd gelagert. Durch einen Kegel werden die Segmente zusammengedrückt und somit die Raumform. Wird der Kegel wieder hochgeschoben, federn die Segmente in ihre Ausgangslage zurück.

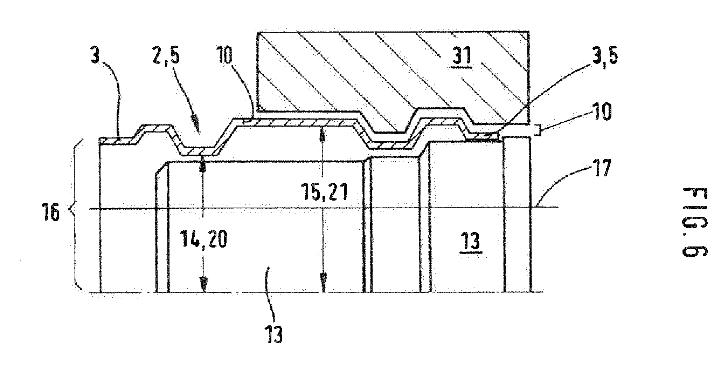

Fig. 6 zeigt in einer geschnittenen Darstellung die Wandung 3 einer Körperstruktur 5 eines Flugkörpers 2. Der Durchmesser 16 der Körperstruktur 5 wird entlang der Längsachse 12 der Körperstruktur 5 im Impandierungsbereichen 14 auf einen Durchmesser 20 verjüngt.

Die Bezugsziffern 15 und 21 zeigen den Rohraussendurchmesser. Er wird durch das Werkzeug 31 außen kalibriert.

Um Beschädigungen der Wandung 3 der Körperstruktur 5 zu verhindern, können werden beim Impandieren und/oder beim Expandieren Dorne 13 und/oder Außenklammern 31 in das Innere der Körperstruktur 5 bzw. auf den Außenumfang der Körperstruktur 5 aufgebracht.

Die Wandstärken 10 der Wandung 3 der Körperstruktur 5 weisen eine vorbestimmte Materialstärke auf und verfügen über eine verfahrensgemäß vorbestimmte Festigkeit.

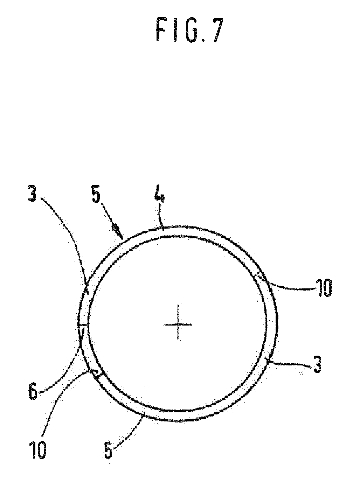

Fig. 7 zeigt im Querschnitt die Wandung 3 der Körperstruktur 5 mit einer Schweisslängsnaht 6, mit der die beiden Bereiche 4 der Wandung 3 zur Ausbildung der Körperstruktur 5 miteinander verbunden werden.

Die Wandung 3 weist in Fig. 7 eine einheitliche Wandstärke 10 auf, die einen verfahrensgemäß vorbestimmten Wert nicht übersteigt und/oder eine verfahrensgemäß bestimmte Festigkeit übersteigt.

### Bezugsziffern

- 1: Raumform
- 2: Flugkörperstruktur
- 3: Wandung
- 4: Bereich
- 5: Körperstruktur
- 6: Schweissnaht
- 7: Spule
- 8: Einlaufrolle
- 9: Werkzeug (impandieren)
- 10: Wandstärke
- 11: Trennstruktur
- 12: Längsachse Körperstruktur
- 13: Dorn
- 14: Impandierungsbereich
- 15: Expandierungsbereich
- 16: Durchmesser Körperstruktur
- 17: nicht belegt
- 18: nicht belegt
- 19: Innendurchmesser
- 20: Durchmesser Impandierungsbereich
- 21: Durchmesser Expandierungsbereich
- 22: Trennstruktur geschlossen
- 23: Innenvolumen Körperstruktur
- 24: Kammer
- 25: Trennstruktur offen
- 26: Durchbruch
- 27: Raumform
- 28: Abstand Wandung
- 29: Abstand Halter
- 30: Abschnitt Körperstruktur
- 31: Werkzeug (außen)

## Patentansprüche

1. Verfahren zum Herstellen einer, wenigstens einen metallenen Werkstoff aufweisenden Raumform (1, 5, 27), umfassend die Schritte:
- Ausbildung der Wandung (3), die kaltumformbar ist,
- Umformung der Wandung (3) zu einer dreidimensionalen Raumform (1)
- Längsnahtverschweissung der Raumform (1)

2. **dadurch gekennzeichnet, dass** die Raumform (1, 5, 27) einen Durchmesser von etwa 60 mm bis zu etwa 500 mm aufweist und zumindest bereichsweise eine Wandung (3) umfasst, die eine 800 N/mm² übersteigende Festigkeit aufweist.Verfahren nach Anspruch 1, **dadurch gekennzeichnet, dass** die Wandung der Raumform (1, 5, 27) eine Festigkeit aufweist, die 1000 N/mm² übersteigt.

3. Verfahren nach Anspruch 1 oder 2, **dadurch gekennzeichnet, dass** der Werkstoff gewalzt und in einem finalen Bearbeitungsschritt kaltverformt wird, so dass er eine Festigkeit erhält, die 800 N/mm² oder bevorzugt 1000 N/mm² übersteigt.

4. Verfahren nach Anspruch 1, **dadurch gekennzeichnet, dass** die Wandung (3) über Einlaufrollen (8) zu einer Raumform (1, 5, 27) geformt wird.

5. Verfahren nach Anspruch 4, **dadurch gekennzeichnet, dass** die Raumform (1, 5, 27) einen zylindrischen oder rohrförmigen oder elliptischen oder ovalen Querschnitt annimmt.

6. Verfahren nach Anspruch 1 oder 2, **dadurch gekennzeichnet, dass** der Werkstoff in einem finalen Bearbeitungsschritt ohne finales Glühen gewalzt wird.

7. Verfahren nach Anspruch 6 **dadurch gekennzeichnet, dass** der Werkstoff auf einen Wert von 1000 N/mm² oder darüber verfestigt wird.

8. Verfahren nach Anspruch 1 oder 2, die Raumform (1, 5), vorzugsweise die Wandung der gesamten Raumform zur Erzielung einer besonders exakten Körperstruktur kalibriert wird.

9. Verfahren nach Anspruch 1 oder 2 **dadurch gekennzeichnet, dass** wird der Außenumfang der Raumform (1, 5, 27) ganz oder zumindest durch Impandieren bereichsweise verringert und / oder durch Expandieren ganz oder zumindest bereichsweise der Außenumfang der Raumform (1, 5, 27) aufgeweitet wird.

10. Verfahren nach Anspruch 9, **dadurch gekennzeichnet, dass** beim Impandieren ein Werkzeug (9) die Wandung (3) der Raumform (1, 5, 27) zumindest bereichsweise im Umfang reduziert.

11. Verfahren nach Anspruch 9, **dadurch gekennzeichnet, dass** beim Expandieren ein Werkzeug (9) die Wandung (3) der Raumform (1, 5, 27) zumindest bereichsweise im Umfang aufweitet.

12. Verfahren nach Anspruch 8 oder 9 **dadurch gekennzeichnet, dass** nach dem Impandieren und / oder Expandieren und/ oder kalibrierenden Impandieren und /oder Expandieren in das Innere der Raumform bzw. Körperstruktur vorzugsweise wenigstens eine Trennstruktur eingefügt wird.

13. Verfahren nach Anspruch 12 **dadurch gekennzeichnet, dass** die Trennstruktur (11) vorzugsweise mittels Laserschweissen von innen mit der Innenseite der Wandung (3) der Raumstruktur (1, 5, 27) verschweisst wird.

14. Vorrichtung, insbesondere Raumform (1, 5, 27), mit einem metallenen Werkstoff, bei der Bereiche (4) der kaltverformten Wandung (3) der Raumform (1, 5 27) miteinander längsnahtverschweisst sind, **dadurch gekennzeichnet, dass** die Raumform (1, 5, 27) einen Durchmesser von etwa 60 mm bis etwa 500 mm aufweist und zumindest bereichsweise eine Wandung (3) umfasst, die eine 800 N/mm² übersteigende Festigkeit aufweist.

15. Vorrichtung nach Anspruch 14 **dadurch gekennzeichnet, dass** die Wandung der Raumform (1, 5, 27) eine Wandstärke aufweist, die eine Festigkeit aufweist, die 1000 N/mm² übersteigt.

16. Vorrichtung nach Anspruch 15 **dadurch gekennzeichnet, dass** die Raumform (1, 5, 27) durch Kalibrieren bearbeitet ist,

17. Vorrichtung nach Anspruch 16 **dadurch gekennzeichnet, dass** die Raumform (1) wenigstens einen impandierenden und/oder expandierenden Bereich (14, 15) aufweist und / oder dass dieser Bereich Kalibrieren bearbeitet ist.

18. Vorrichtung nach einem oder mehrerer der Ansprüche 14 bis 17, **dadurch gekennzeichnet, dass** die Raumform (1) wenigstens eine Trennstruktur (11) aufweist, die im Passsitz an einen Innenumfang der Raumform (1, 5, 27) eingepasst ist.

19. Vorrichtung nach Anspruch 18 **dadurch gekennzeichnet**, die Trennstruktur (11) vorzugsweise mittels Laserschweissen von innen mit der Innenseite der Wandung (3) der Raumstruktur (1, 5, 27) verschweisst ist.

20. Vorrichtung nach Anspruch 18 oder 19, **dadurch gekennzeichnet, dass** sich die Trennstruktur (11) radial zur Längsachse (12) der Raumform (1, 5, 27) erstreckt.
Vorrichtung nach Anspruch 18 **dadurch gekennzeichnet, dass** sich die Trennstruktur (11) koaxial zur Längsachse (12) der Raumform (1, 5, 27) erstreckt.
